# EUROPEAN PATENT APPLICATION

(11) **EP 1 669 722 A1**
(43) Date of publication of application: **14.06.2006**
(21) Application number: 04773578.2
(22) Date of filing: 27.09.2004
(51) Int. Cl.: G01C 21/26, G08G 1/0969

(54) **VEHICLE-MOUNTED COMMUNICATION DEVICE**

(30) Priority: 25.09.2003 JP 2003333644
(71) Applicant: MATSUSHITA ELECTRIC INDUSTRIAL CO., LTD., Kadoma-shi, Osaka 571-8501 (JP)
(72) Inventor: SASO, Atsushi, * (JP); SAKAKIBARA, Mizuho, * (JP); ITABASHI, Toshiyuki, * (JP); IWASAKI, Morio, * (JP); OKAMOTO, Masato, * (JP); TANIZAWA, Masahiro, * (JP)
(74) Representative: Pautex Schneider, Nicole Véronique
(86) International application number: PCT/JP2004/014549
(87) International publication number: WO 2005/031265

(57) **Abstract**

A communication device to be mounted on one automotive vehicle, comprising: a camera **(11)** for inputting images, a microphone **(12)** for inputting voices, a travel control section **(17)** for processing travel information, a communication section **(16)** for transmitting the images inputted by the camera **(11),** the voices inputted by the microphone **(12),** and travel information processed by the travel control section **(17)** to other automotive vehicles, and receiving information from said other automotive vehicles, and a liquid crystal display **(13)** and a loudspeaker **(14)** for outputting the information received by the communication section (**16**). The communication device outputs images/voices received from said other automotive vehicles to the liquid crystal display **(13)**, and controls travel of said one automotive vehicle based on travel information received from travel control sections **(17)** on said other automotive vehicles.

## Description

### Technical Field

The present invention relates to a communication device to be mounted on an automotive vehicle as a vehicle navigation device or the like comprising input/output means for inputting/outputting images and voices, and more particularly to a communication device to be capable of exchanging images, voices, and travel information shared with other automotive vehicles.

### Background of the Invention

In general, it is well known that vehicle occupants, on an automotive vehicle such as for example a minivan, can relax and enjoy driving and talking with each other on the route to their destination.

It is also known that a driver tends to get tired of driving an automotive vehicle when going to a destination without sharing that automotive vehicle with his or her friends.

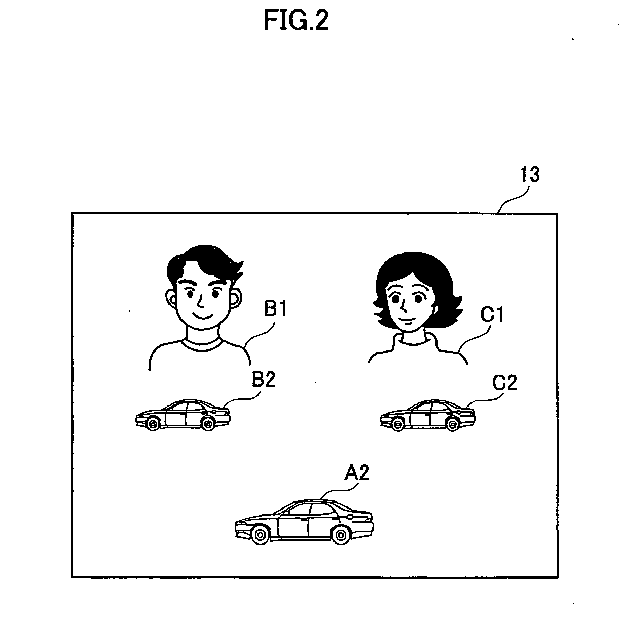

As an apparatus which can solve part of the above-mentioned problem, there has been known a communication-type vehicle navigation system which is disclosed in Japanese Patent Laid-Open Publication No. H10-185595 (see paragraph 0005 and FIG 2). The above-mentioned vehicle navigation system comprises two or more vehicle navigation devices on respective automotive vehicles. The vehicle navigation device on one of the automotive vehicles is adapted to receive position information from the vehicle navigation device on the other of the automotive vehicles by performing wireless communication with the vehicle navigation device on the other of the automotive vehicles, and to superimpose a position marker indicative of the current position of said one automotive vehicle on a road map displayed on a screen with a position marker indicative of the current position of said other automotive vehicles. Additionally, the vehicle navigation device on said one automotive vehicle is adapted to receive position information from the vehicle navigation devices on the selected automotive vehicles by performing wireless communication with the vehicle navigation devices on the selected automotive vehicles, and to superimpose a position marker indicative of the current position of said one automotive vehicle on a road map displayed on a screen with position markers indicative of the current positions of the selected automotive vehicles.

The above-mentioned vehicle navigation system can allow the vehicle occupants on said one automotive vehicle to know the current positions of said other automotive vehicles by superimposing a position marker indicative of the current position of said one automotive vehicle on a road map displayed on a screen with position markers indicative of the current positions of said other automotive vehicles. However, the conventional vehicle navigation system cannot allow the vehicle occupants on said one automotive vehicle to enjoy talking with vehicle occupants on said other automotive vehicles, as if the former vehicle occupants are sharing one vehicle with the latter vehicle occupants when going toward their destination.

The above-mentioned vehicle navigation system, however, encounters such a problem that the vehicle occupants on said one automotive vehicle cannot watch images indicative of the vehicle occupants on said other automotive vehicles, and hear their voices although the vehicle occupants on said one automotive vehicle can find the current positions of said other automotive vehicles. Additionally, the vehicle navigation device mounted on said one automotive vehicle cannot share travel information with the vehicle navigation device mounted on said other automotive vehicles.

### Disclosure of Invention

It is, therefore, an object of the present invention to provide a communication device adapted to be mounted on an automotive vehicle, and to be capable of performing communication with external devices mounted on other automotive vehicles, and which can exchange travel information shared with said other automotive vehicles.

In order to attain the object, there is provided a communication device to be mounted on an automotive vehicle, comprising: inputting means for inputting images and voices; travel information processing means for processing travel information; communication means for transmitting the images and voices inputted by the inputting means and the travel information processed by the travel information processing means to other device, and for receiving information from the other devices; and outputting means for outputting the information received by the communication means, wherein the outputting means is adapted to output images and voices received as the information by the communication means from other automotive vehicle, and the travel information processing means is adapted to process the travel information on the basis of travel information received by the communication means from travel information processing means on said other automotive vehicle.

The communication device thus constructed as previously mentioned can allow the vehicle occupants on one automotive vehicle to know the vehicle occupants on other automotive vehicle, and to enjoy driving and talking with the vehicle occupants on said other automotive vehicle, as if the vehicle occupants on said one automotive vehicle are sharing one vehicle with the vehicle occupants on said other automotive vehicle, without getting tired of driving the automotive vehicle even if the driver is on said one automotive vehicle with no passenger, by performing communication with said other automotive vehicle to exchange the images/voices and the travel information shared with said other automotive vehicle. Even if there are many automotive vehicles which are traveling with said one automotive vehicle, the communication device can allow vehicle occupants on said one automotive vehicle to enjoy driving and talking with said other automotive vehicles by reason that the communication means is adapted to output images and voices to said other automotive vehicles.

Furthermore, the communication device can allow the automotive vehicles to share the travel information with each other by controlling, on the basis of the travel information received from said other automotive vehicle, a travel route to be set to said one automotive vehicle. Here, the term "travel information received from said other automotive vehicle" is intended to indicate a destination, a travel route to the destination from a current position of said other automotive vehicle, and the like. The communication device according to the present invention can allow said one automotive vehicle to track said other automotive vehicle by changing automatically the destination and the travel route, on the basis of the destination and the travel route information received from said other automotive vehicle, to allow said one automotive vehicle to track said other automotive vehicle.

In the communication device according to the present invention, the outputting means has a screen, the outputting means is adapted to display on the screen images indicative of faces of vehicle occupants on said other automotive vehicle.

The communication device thus constructed as previously mentioned can allow the vehicle occupants on said one automotive vehicle to recognize the vehicle occupants on said other automotive vehicle through the image displayed on the screen by displaying on the screen the image indicative of the faces of the vehicle occupants on said other automotive vehicle.

In the communication device according to the present invention, the outputting means has a screen, the outputting means is adapted to display on the screen an image indicative of the automotive vehicle with an image indicative of said other automotive vehicle, and the travel information processing means is adapted to perform a setting operation to set a destination the same as a destination set in said other automotive vehicle, on the basis of the travel information received by the communication means from the travel information processing means on said other automotive vehicle, before controlling the outputting means to connect the image indicative of the automotive vehicle to the image indicative of said other automotive vehicle through a line.

The communication device thus constructed as previously mentioned can allow the vehicle occupants on said one automotive vehicle to check whether or not the destination of said one automotive vehicle is the same as the destination of said other automotive vehicle, and allow said one automotive vehicle to travel with said other automotive vehicle, as if the vehicle occupants on said one automotive vehicle are sharing one vehicle with the vehicle occupants on said other automotive vehicle, without allowing the driver of each automotive vehicles to get tired of driving the respective automotive vehicle.

In the communication device according to the present invention, the outputting means is adapted to output travel route information received from said other automotive vehicle as travel information by the communication means when the travel information processing means is operated to perform a setting operation to set a destination the same as a destination set in said other automotive vehicle.

The communication device thus constructed as previously mentioned can allow said one automotive vehicle to track said other automotive vehicle to the destination on the basis of the travel information received from said other automotive vehicle by reason that the outputting means is adapted to output the travel information received from said other automotive vehicle when said one automotive vehicle set as a trailing vehicle is traveling to the destination with said other automotive vehicle set as a leading vehicle. This leads to the fact that the communication device can prevent the driver of said one automotive vehicle from watching the road map displayed on the screen, reduce its tedious task to be imposed on the driver of said one automotive vehicle.

### Brief Description of the Drawings

The features and advantages of a communication device according to the present invention will be more clearly understood from the following detailed description when considered in connection with the accompanying drawings, in which:
FIG **1** is a block diagram showing one preferred embodiment of the communication device according to the present invention;
FIG **2** is a schematic view showing a liquid crystal display having an example image displayed thereon, and forming part of the communication device according to the present invention;
FIG. **3** is a sequence diagram showing a process in which the images/voices and the navigation operating signal are exchanged with other automotive vehicles by the communication device according to the embodiment of the present invention;
FIG **4** is a view showing a liquid crystal display of the communication device with an example image; and
FIG 5 is a schematic diagram showing a relationship between one leading vehicle and other trailing vehicles to be ensured by the communication device according to the embodiment of the present invention.

### Detailed Description of the Preferred embodiment

One preferred embodiment of the communication device according to the present invention will now be described hereinafter in accordance with accompanying drawings.

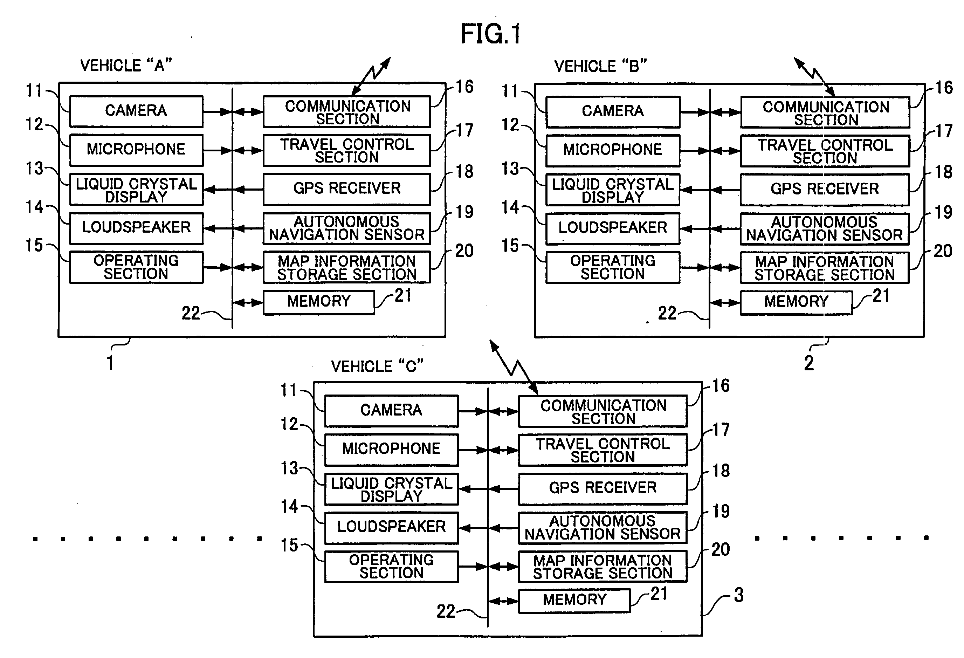

Referring to FIGS. **1** to **5,** there is shown one preferred embodiment of the communication device according to the present invention.

The following description will be directed to the construction of the embodiment of the communication device according to the present invention. The vehicle navigation devices (communication device to be mounted on an automotive vehicle) **1, 2,** and **3** mounted on respective automotive vehicles **"A", "B",** and **"C"** are shown in FIG **1,** and adapted to perform communication with each other.

Each of the vehicle navigation devices **1** to **3** comprises a camera **11,** a microphone **12,** a liquid crystal display **13,** a loudspeaker **14,** an operating section **15,** a communication section **16,** a travel control section **17,** a GPS (Global Communication System) receiver **18,** an autonomous navigation sensor **19,** a map information storage section **20,** and a memory **21.** The above-mentioned elements **11** to **21** are electrically connected to one another through a bus line **22.**

The camera **11** located in front of a driving seat is adapted to take an image of a driver, to perform A/D conversion of the image signal, and to output the converted image signal to the travel control section **17.** The microphone **12** is adapted to produce a voice signal indicative of voices, and to perform A/D conversion of the voice signal, and to output the converted voice signal to the travel control section **17.** In this embodiment, each of the camera **11** and the microphone **12** is constituted as inputting means. Here, the camera **11** may be located in front of a front passenger seat or a back passenger seat if the camera **11** can meet the requirement of producing an image signal indicative of vehicle occupants.

The liquid crystal display **13** is adapted to display a road map with a travel route to a destination on a screen. Additionally, the liquid crystal display **13** is adapted to display an image indicative of faces of vehicle occupants on other automotive vehicles with markers indicative of user's automotive vehicle and said other automotive vehicles on the screen.

More specifically, the liquid crystal display **13** of automotive vehicle **"A"** is adapted to display images **B1** and **C1** indicative of vehicle occupants on automotive vehicles **"B"** and **"C"** with markers **B2** and **C2** attached on the underside of the respective images **B1** and **C1,** the markers **B2** and **C2** being indicative of automotive vehicles **"B"** and **"C".** Additionally, the liquid crystal display **13** of automotive vehicle **"A"** is adapted to display a mark **A2** that is distinguishable from each of the markers **B2** and **C2,** and larger in size than each of the markers **B2** and **C2,** as a marker.

The loudspeaker **14** is adapted to output a sound indicative of various types of information available in driving an automotive vehicle, In this embodiment, the loudspeaker **14** is adapted to output a sound indicative of voices of the vehicle occupants on said other automotive vehicles and travel route information. In this embodiment, the liquid crystal display **13** and loudspeaker **14** are collectively constituted as outputting means.

The operating section **15** is constituted by a touch-sensitive panel mounted on the liquid crystal display **13,** a touch-sensitive panel not mounted on the liquid crystal display **13,** or the like. The operating section **15** is adapted to have inputted therein various types of information needed to set or to operate the vehicle navigation device **1, 2** or **3** to set the destination, and to switch the images to be selectively displayed on the screen of the liquid crystal display **13.**

The communication section (communication means) **16** is adapted to perform communication with each of the communication sections **16** on said other automotive vehicles. The communication section **16** is adapted to transmit the images taken by the camera **11** to each of the communication sections **16** on said other automotive vehicles, the voices inputted by the microphone **12,** and the travel information processed by the travel control section **17** which will be described in detail hereinafter, and to receive the images/voices of the vehicle occupants on said other automotive vehicles and the travel information of said other automotive vehicles from the communication sections **16** on said other automotive vehicles.

More specifically, the communication section **16** has a mobile communication terminal for issuing connection requests to other communication sections **16** on said other automotive vehicles. The communication section **16** is adapted to exchange the images/voices with said other communication sections **16** on said other automotive vehicles, and to transmit the travel information to said other communication sections **16** on said other automotive vehicles after establishing communication connections to said other communication sections **16** on said other automotive vehicles. When, on the other hand, the communication section **16** is operated to receive a connection request from other communication section **16** on said other automotive vehicle, the communication section **16** is adapted to exchange the images/voices with said other communication section **16** on said other automotive vehicle, and to receive the travel information from said other communication section **16** on said other automotive vehicle after establishing a communication connection to said other communication section 16 on said other automotive vehicle.

The travel control section (travel information processing means) **17** is constituted by a central processing unit (CPU) for controlling the whole of the vehicle navigation device **1, 2** or **3** on the basis of information received from each of the GPS receiver **18,** the autonomous navigation sensor **19,** the map information storage section **20,** and the memory **21** to process travel information, to change destinations of said other automotive vehicles, to exchange the travel information with said other automotive vehicles, to control the liquid crystal display **13,** and to perform other operations.

The GPS receiver **18** is adapted to detect a current position by receiving radio waves from artificial satellites, and to output a signal indicative of the detected current position to the travel control section **17.** The autonomous navigation sensor **19** includes a distance sensor such as a velocity sensor and an acceleration sensor, and a direction sensor such as a gyroscope. The autonomous navigation sensor **19** is adapted to output signals produced by those sensors to the travel control section **17.**

The travel control section **17** is adapted to calculate the current position of the automotive vehicle at a relatively high accuracy by correcting the signal received from the GPS receiver **18** on the basis of the signals received from the autonomous navigation sensor **19,** and by correcting the signals received from the autonomous navigation sensor **19** on the basis of the signal received from the GPS receiver **18.** The map information storage section **20** is constituted by CD-ROM, DVD, memory card, or the like. The map information storage section 20 is adapted to output map information to the travel control section **17.** On the other hand, the travel control section **17** may be adapted to access the Internet, and to obtain the map information from a server on the Internet.

The travel control section **17** is adapted to output the received map information to the liquid crystal display **13** with the current position information of the automotive vehicle. When the operating section **15** is operated to input a destination information into the travel control section **17,** the travel control section **17** is adapted to execute a navigation program stored in the memory **21** to search an optimum travel route to the destination inputted by the operating section **15** with respect to the current position of the automotive vehicle, to perform a route guidance operation to inform about the optimum travel route with a sound outputted by the loudspeaker **14,** to perform a display operation to display a map showing an area around the current position of the automotive vehicle on the liquid crystal display **13,** and other operations.

The travel control section **17** is adapted to transmit the travel information, such as a destination and a travel route, to said other automotive vehicles via the communication section **16.** On the other hand, the travel control sections **17** on said other automotive vehicles are adapted to change the respective destinations on the basis of the received travel information, and to perform a route guidance operation to inform about the travel route with a sound outputted by the loudspeaker **14** on the basis of the received travel route and their current positions. The travel control sections **17** on each automotive vehicle is adapted to draw a line between the marker indicative of said one automotive vehicle and each of the markers indicative of said other automotive vehicles on the screen.

The memory **21** has a navigation program stored therein. The memory **21** further has destination information (name such as for example "Karuizawa Station", its telephone number, its address, and its position (latitude and longitude)), and route information (intersections, landmarks, and their positions (latitude and longitude) on the route to the destination) stored therein. The travel control sections **17** is adapted to retrieve the destination information and the route information from the memory **21** in response to the operation of the operating section 15, and to have the communication section **16** transmit the destination information and the route information to said other automotive vehicles as the travel information.

The memory **21** further has travel route information stored therein, the travel route information being indicative of a travel route about which the driver is informed on the route to the destination. The memory **21** further has sound data (such as for example a phrase "Please turn to the right at the next intersection.") stored therein, the sound data being needed in order to inform about the travel route with a sound to be outputted by the loudspeaker **14** to ensure that the automotive vehicle turns to the right or the left at the next intersection when the automotive vehicle is about to enter an intersection on the route to the destination.

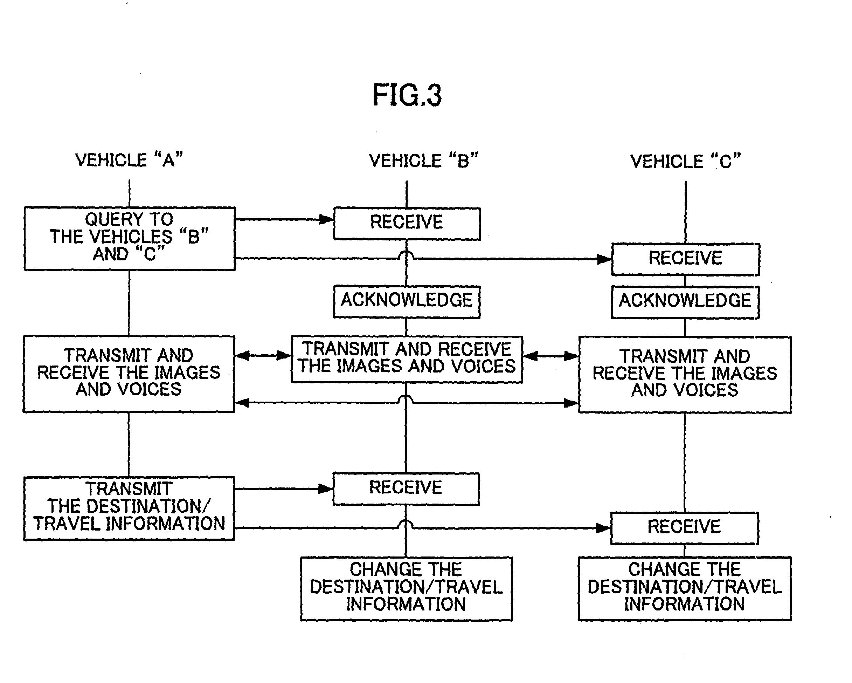

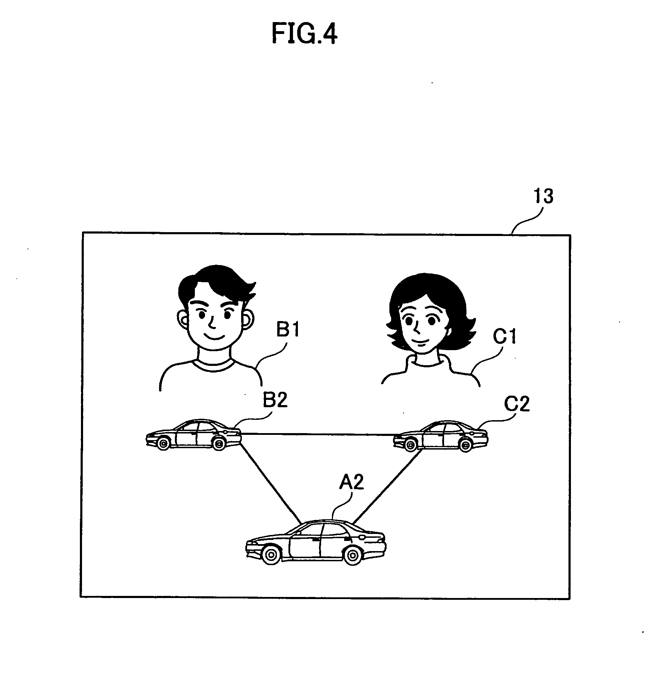

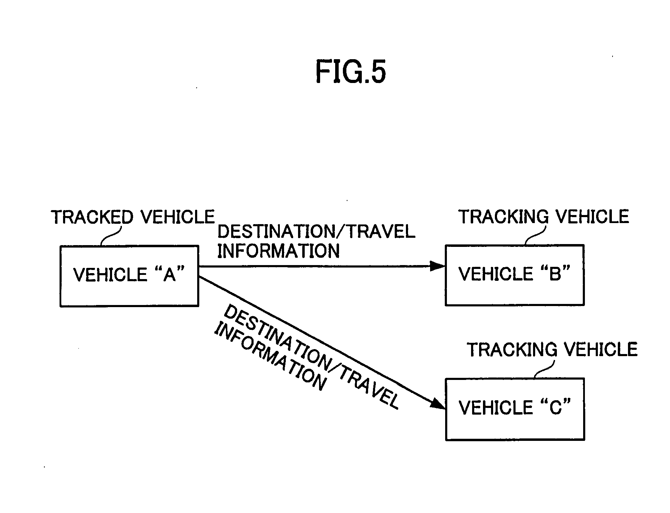

The operations of the vehicle navigation devices **1** to **3** thus constructed as previously mentioned will be then described hereinafter. FIG **3** is a sequence diagram showing the process in which images, voices, and navigation operating signals are exchanged by the vehicle navigation devices **1** to **3.** FIG **4** is a schematic view showing a liquid crystal display **13** having an example image displayed thereon. FIG **5** is a schematic diagram showing a data flow between the automotive vehicle **"A"** set as a leading vehicle and each of the automotive vehicles **"B"** and **"C"** set as a trailing vehicle.

The following description will be directed to the case that the vehicle navigation devices **2** and **3** mounted on the automotive vehicles **"B"** or **"C",** are operated by respective drives to have, as a destination, "Kamikouchi Station" inputted therein, and the vehicle navigation device 1 mounted on the automotive vehicle **"A"** is operated by a driver to have, as a destination, "Karuizawa Station" inputted therein.

As shown in the sequence diagram of FIG. **3,** the operating section **15** of the vehicle navigation device **1** mounted on the automotive vehicle **"A"** is firstly operated to make a query on whether or not to exchange images and voices with each of the automotive vehicles **"B"** and **"C"** by performing communication with each of the automotive vehicles **"B"** and **"C".** In this step, the operating section **15** of the vehicle navigation device **1** is operated to have the travel control section **17** transmit query signals to the automotive vehicles **"B"** and **"C"** after retrieving telephone numbers related to the automotive vehicles **"B"** and **"C"** from the memory **21.**

When the query signals are respectively received by the communication sections **16** of the automotive vehicles **"B"** and **"C",** each of the travel control sections **17** is operated to have the liquid crystal display **13** display an image indicative a message such as "There is a message from a driver of the automotive vehicle **"A"** on whether or not to perform communication, and exchange images/voices with the automotive vehicle **"A"."** on the screen, or to have the loudspeaker **14** output a sound indicative of the message such as "There is a message from a driver of the automotive vehicle **"A"** on whether or not to perform communication, and exchange images/voices with the automotive vehicle **"A"."** in each of the automotive vehicle **"B"** and **"C".**

Here, the operating section **15** may extract the name of the driver of the automotive vehicle **"A"** from name data stored in the memory **21.** As part of the above-mentioned message, the phrase "from a driver of a vehicle **"A"."** may be replaced by a phrase "from Mr./Ms. *******."

When the communication with the automotive vehicle **"A"** are acknowledged by each of the drivers of the automotive vehicles **"B"** and **"C",** the communication connection to the communication section **16** of the automotive vehicle **"A"** is established by each of the communication sections **16** of the automotive vehicles **"B"** and **"C".** The images inputted by the cameras **11** and the voices inputted by the microphones **12** of said other automotive vehicles **"B"** and **"C"** is then transmitted to the automotive vehicle **"A".**

As shown in FIG **2,** the images **B1** and **C1** indicative of the drivers of the automotive vehicles **"B"** and **"C"** are displayed on the liquid crystal display **13** of the automotive vehicle **"A"** with the markers **B2** and **C2** related to the automotive vehicles **"B"** and **"C",** the sounds indicative of the voices of the drivers of the automotive vehicles **"B"** and **"C"** being also outputted by the loudspeaker **14** of the automotive vehicle **"A".** As will be seen from the foregoing description, the vehicle navigation device of the automotive vehicle **"A"** can exchange the images and the voices with each of the vehicle navigation devices of the automotive vehicles **"B"** and **"C"** in real time.

In order to perform communication between the automotive vehicles **"A", "B",** and **"C",** the communication connection between the automotive vehicles **"B"** and **"C"** is also established by each of the communication sections **16** of the automotive vehicles **"B"** and **"C".** More specifically, the images indicative of the drivers of the automotive vehicles **"A"** and **"C"** are displayed on the screen of the liquid crystal display **13** of the automotive vehicle **"B",** the images indicative of the drivers of automotive vehicles **"A"** and **"B"** are displayed on the screen of the liquid crystal display **13** of the automotive vehicle **"C".** From the foregoing description, it will be understood that the vehicle navigation device can allow the drivers of the respective automotive vehicles to feel as if they are sharing one vehicle, and to enjoy driving and talking with each other.

The following description will be directed to the case that each of the automotive vehicles **"B"** and **"C"** tracks the automotive vehicle **"A",** each of the automotive vehicles **"B"** and **"C"** is the same in destination as the automotive vehicle **"A".**

The communication section **16** of the automotive vehicle **"A"** is firstly operated to transmit a destination change signal indicative of a destination "Karuizawa Station" to each of the automotive vehicles **"B"** and **"C".** When the destination change signal is received by each of the communication sections **16** of the automotive vehicles **"B"** and **"C",** each of the travel control section **17** of the automotive vehicles **"B"** and **"C"** has the loudspeaker **14** output a voice "Do you accept the destination change signal to change your destination to Karuizawa Station?".

When each of the operating sections **15** of the automotive vehicles **"B"** and **"C"** is operated to accept the destination change signal, the acceptance signals are respectively transmitted by the communication sections **16** of the automotive vehicles **"B"** and **"C"** to the travel control section **17** of the automotive vehicle **"A".** The information on a destination and a travel route to that destination from a current position is then transmitted by the communication section 16 of the automotive vehicle **"A"** to the automotive vehicles **"B"** and **"C".**

When the acceptance signals are received by the communication section **16** of the automotive vehicle **"A"** from the automotive vehicles **"B"** and **"C",** the travel control section **17** of the automotive vehicle **"A"** is operated to control the liquid crystal display **13** to draw a line between the marker **A2** indicative of the automotive vehicle **"A"** and each of the markers **B2** and **C2** of the automotive vehicles **"B"** and **"C"** on the screen.

When the communication section **16** of the automotive vehicle **"A"** is operated to notify each of the automotive vehicles **"B"** and **"C"** that each of the automotive vehicles **"B"** and **"C"** is the same in destination as the automotive vehicle **"A",** the travel control section **17** of the automotive vehicle **"B"** controls the liquid crystal display **13** to draw a line between the marker **B2** indicative of the automotive vehicle **"B"** and each of the markers **A2** and **C2** of the automotive vehicles **"A"** and **"C"** on the screen, and the travel control section **17** of the automotive vehicle **"C"** controls the liquid crystal display **13** to draw a line between the marker **C2** indicative of the automotive vehicle **"C"** and each of the markers **A2** and **B2** of the automotive vehicles **"A"** and **"B"** on the screen.

When the automotive vehicle **"A"** is traveling as a leading vehicle with the automotive vehicles **"B"** and **"C",** the travel route information is transmitted by the travel control section **17** of the automotive vehicle **"A"** to each of the automotive vehicles **"B"** and **"C".** Whenever the automotive vehicle **"A"** turns to the right or the left at an intersection on the route the destination, the guidance information (travel route information) such as for example "Turn to the right at ******* intersection." is transmitted to the automotive vehicles **"B"** and **"C"** tracking the automotive vehicle **"A".**

When the travel route information is received from the automotive vehicle **"A"** by each of the communication sections **16** of the automotive vehicles **"B"** and **"C",** the received travel route information is stored in each of the memories **21** of the automotive vehicles **"B"** and **"C"** by each of the travel control sections **17** of the automotive vehicles **"B"** and **"C".** When each of the automotive vehicles **"B"** and **"C"** reaches at ******* intersection, each of the travel control sections **17** of the automotive vehicles **"B"** and **"C"** has the loudspeaker **14** output a sound such as "We will soon reach at ******* intersection. Please turn to the right at ******* intersection". Each of the drivers of the automotive vehicles **"B"** and **"C"** hears the sound outputted by the loudspeaker **14,** and tracks the automotive vehicle **"A"** to the destination.

From the foregoing description, it will be understood that the communication device according to the embodiment of the present invention can allow the vehicle occupants on the automotive vehicle **"A"** to know the drivers of the automotive vehicles **"B"** and **"C"** through the images/voices shared with the automotive vehicles **"B"** and **"C",** and to enjoy driving and talking with the vehicle occupants on the automotive vehicles **"B"** and "C" through the images/voices shared with the automotive vehicles **"B"** and **"C"** without getting tired of driving to the destination by reason that the communication sections **16** of the automotive vehicles **"B"** and **"C"** are adapted to transmit the images/voices to the communication section **16** of the automotive vehicle **"A".** The communication device according to the embodiment can allow the driver of the automotive vehicle **"A"** to feel as if the vehicle occupants on the automotive vehicles **"B"** and **"C"** are shared with the automotive vehicle **"A"** even if the driver is on the automotive vehicle **"A"** with on passenger. Even if the communication device according to the embodiment of the present invention has an increased number of other automotive vehicles, the communication device according to the embodiment of the present invention can allow vehicle occupants on those vehicles to enjoy driving and talking with each of said other automotive vehicles.

The communication device according to the embodiment of the present invention can share the travel information with the automotive vehicles **"B"** and **"C"** by reason that the communication device mounted on the automotive vehicle **"A"** controls the travel of the automotive vehicles **"B"** and **"C"** on the basis of the travel information of the automotive vehicle **"A".** More specifically, the communication device according to the embodiment of the present invention can automatically change the destinations and the travel route information of the automotive vehicles **"B"** and **"C"** on the basis of the destination and the travel route information of automotive vehicle **"A"** to allow the drivers of the automotive vehicles **"B"** and "C" to track the automotive vehicle **"A"** to the destination.

The communication device thus constructed as previously mentioned can allow the driver of each automotive vehicle **"A", "B",** or **"C"** to know the other drivers on said the other automotive vehicles **"A", "B",** or **"C"** by the liquid crystal display **13** on one automotive vehicle displays the images indicative of the drivers on said other automotive vehicles **"A", "B",** or **"C"** on the respective screens.

The communication device thus constructed as previously mentioned can allow the driver of the automotive vehicle **"A"** to know whether or not each of the destinations changed in the automotive vehicles **"B"** and **"C"** is the same as the destination set in the automotive vehicle **"A"** by reason that the travel control section **17** of the automotive vehicle **"A"** is adapted to draw a line between the marker **"A2"** indicative of the automotive vehicle **"A"** and each of the markers **"B2"** and **"C2"** indicative of the automotive vehicles **"B"** and **"C"** on the screen when each of the changed destinations of the automotive vehicles **"B"** and **"C"** is the same as the destination set in the automotive vehicle **"A".**

The communication device thus constructed as previously mentioned can allow the vehicle occupants on the automotive vehicle **"A"** to know whether or not each of the destinations changed in the automotive vehicles **"B"** and **"C"** is the same as the destination set in the automotive vehicle **"A",** and to enjoy driving and talking with the vehicle occupants on the automotive vehicles **"B"** and **"C"** while feeling as if the vehicle occupants on the automotive vehicles **"B"** and **"C"** are shared with the automotive vehicle **"A".**

The communication device thus constructed as previously mentioned can allow each of the automotive vehicles **"B"** and "C" to track the automotive vehicle **"A"** to the destination on the basis of the travel information received from the automotive vehicle **"A"** by reason that the loudspeaker **14** is adapted to output the travel information received from the automotive vehicle **"A"** when the automotive vehicle **"A"** set as a leading vehicle is traveling to the destination with the automotive vehicles **"B"** and **"C"** set as a trailing vehicle. This leads to the fact that the communication device can prevent each of the drivers of the automotive vehicles **"B"** and **"C"** from watching the road map displayed on the respective screen, and reduce its tedious task to be imposed on each of the drivers of the automotive vehicles **"B** and **C".**

While there has been described in the foregoing embodiment about the fact that the communication sections **16** of the vehicle navigation devices **1** to **3** are adapted to perform direct communication with each other, the communication sections **16** of the vehicle navigation devices **1** to **3** may be adapted to perform communication with each other via a center device having an index server and the like. When the center device is operated to receive a connection request with a telephone number from any one of the communication sections **16,** the center device searches for a vehicle navigation devices related to the received telephone number, then establishes the communication connection between the calling vehicle navigation device and the called vehicle navigation device, and then allow said calling vehicle navigation device to exchange the inputted images and voices with said called vehicle navigation device, and allow said calling vehicle navigation device to share the travel information with said called vehicle navigation devices.

### Industrial Applicability

The communication device according to the present invention has an effect to perform communication with other communication devices mounted on other automotive vehicles, and an effect to share travel information such as a current position and a travel route with said other communication devices. The communication device according to the present invention is available as a vehicle navigation device comprising input/output means for inputting/outputting images and voices. The communication device according to the present invention can allow vehicle occupants on an automotive vehicle to enjoy driving and talking with vehicle occupants on said other automotive vehicles by using the inputted images and voices, and share the travel information with said other communication devices.

## Claims

1. A communication device to be mounted on an automotive vehicle, comprising:
inputting means for inputting images and voices;
travel information processing means for processing travel information;
communication means for transmitting said images and voices inputted by said inputting means and said travel information processed by said travel information processing means to other device, and for receiving information from said other devices; and
outputting means for outputting said information received by said communication means, wherein
said outputting means is adapted to output images and voices received as said information by said communication means from other automotive vehicle, and
said travel information processing means is adapted to process said travel information on the basis of travel information received by said communication means from travel information processing means on said other automotive vehicle.

2. The communication device as set forth in claim 1, in which
said outputting means has a screen, said outputting means being adapted to display on said screen images indicative of faces of vehicle occupants on said other automotive vehicles.

3. The communication device as set forth in claim 1, in which
said outputting means has a screen, said outputting means being adapted to display on said screen an image indicative of said automotive vehicle with an image indicative of said other automotive vehicle, and
said travel information processing means is adapted to perform a setting operation to set a destination the same as a destination set in said other automotive vehicle, on the basis of said travel information received by said communication means from said travel information processing means on said other automotive vehicle, before controlling said outputting means to connect said image indicative of said automotive vehicle to said image of said other automotive vehicle through a line.

4. The communication device as set forth in claim 1, in which
said outputting means is adapted to output travel route information received from said other automotive vehicle as travel information by said communication means when said travel information processing means is operated to perform a setting operation to set a destination the same as a destination set in said other automotive vehicle.
